# FASCICULE DE BREVET EUROPEEN

(11) **EP 0 584 353 B1**
(45) Date de publication et mention de la délivrance du brevet: **11.09.1996**
(21) Numéro de dépôt: 93918755.5
(22) Date de dépôt: 11.03.1993
(51) Int. Cl.: G02B 26/08

(54) **MIROIR DEFORMABLE ET INSTALLATION A LASER CORRESPONDANTE**
VERFORMBARER SPIEGEL UND KORRESPONDIERENDE LASEREINRICHTUNG
DEFORMABLE MIRROR AND CORRESPONDING LASER EQUIPMENT

(30) Priorité: 12.03.1992 FR 9202949
(43) Date de publication de la demande: 02.03.1994
(73) Titulaire: COMMISSARIAT A L'ENERGIE ATOMIQUE, 75015 Paris (FR)
(72) Inventeur: ALFILLE, Jean-Pascal, F-92140 Clamart (FR); POTIQUET, Liliane, F-78170 La Celle-Saint-Cloud (FR); STOCKMANN, Bernard, F-91700 Sainte-Geneviève-Des-Bois (FR)
(74) Mandataire: Signore, Robert
(86) Numéro de dépôt international: FR9300244
(87) Numéro de publication internationale: WO9318427

(56) Documents cités:
- EP-A- 0 209 449
- DE-A- 3 036 083
- FR-A- 2 528 585
- GB-A- 2 019 031
- US-A- 4 056 313
- US-A- 4 116 539

## Description

L'invention se rapporte à un miroir déformable qui peut notamment être utilisé dans une installation à laser.

Les lasers émettent des faisceaux dont l'énergie n'est pas uniforme sur la section. Cette répartition d'énergie a en général une symétrie de révolution et se présente sous la forme d'une succession d'anneaux d'énergies différentes. Un cas particulier de cette répartition peut être une loi normale. Le désavantage d'une telle situation apparaît notamment quand le laser est utilisé pour faire un traitement de surface sur une pièce, car l'échauffement de la surface est irrégulier, de même que le traitement obtenu.

De nombreux exemples de dispositifs dans lesquels le miroir est déformé pour modifier la forme de la tache focalisée sur la surface à traiter et y répartir l'énergie de façon différente, et notamment pour focaliser le faisceau suivant un rectangle allongé (focalisation linéique) et d'intensité lumineuse uniforme, existent déjà dans l'art antérieur.

On peut distinguer deux familles. Dans la première, illustrée notamment par le brevet français 2 584 824 et par le brevet américain 4 239 343, le miroir consiste en une membrane déformable tendue sur un boîtier dont le fond est muni de pièces d'appui de hauteur réglable dont chacune atteint un point particulier de la membrane. Le réglage de chacun des appuis peut fournir en particulier une courbure constante pour toutes les sections du miroir disposées dans une direction -que nous appellerons longitudinale- afin de faire converger le faisceau pour commander la largeur de la tache focalisée, et une courbure irrégulière sur les sections perpendiculaires - dans une direction transversale - pour que la concavité du miroir soit maximale à la périphérie et minimale au centre, où le miroir peut d'ailleurs être convexe, afin de disperser l'intensité lumineuse au centre du faisceau. Cette disposition fournit une tache lumineuse de forme rectangulaire et où l'énergie est uniformément répartie. Il est évidemment possible d'obtenir d'autres formes de focalisation du faisceau selon les besoins.

De tels dispositifs de miroir déformable sont longs à régler car les pièces d'appui sont nombreuses et le réglage de chacune se répercute à la fois sur une courbure de réglage de largeur et sur une courbure de réglage d'intensité, c'est-à-dire qu'il y a un couplage entre les deux réglages.

L'autre famille de l'art antérieur est illustrée notamment par les brevets américains 4 685 780, 4 692 583 et par le brevet japonais 62 336 082 qui utilisent une paire de miroirs dont le premier est un miroir à facettes divergentes pour disperser l'énergie du centre du faisceau et le second est un miroir à concavité uniforme pour régler la largeur de la tache focalisée. Ces miroirs sont des prismes indéformables. Il n'est donc pas possible de modifier les caractéristiques de la tache focalisée à moins de remplacer les prismes. On indique dans le premier de ces brevets que la répartition de l'énergie et les dimensions de la tache focalisée peuvent être changées en remplaçant le miroir à facettes situé en amont de l'autre, ce qui impose de posséder une collection de miroirs si on veut disposer de possibilités suffisantes de réglage. L'utilisation de deux miroirs séparés nécessite de respecter strictement des conditions géométriques de position, d'orientation et de distance pour obtenir les réflexions de lumière qui aboutissent au résultat envisagé. Enfin, ces dispositifs présentent l'inconvénient que la paire de miroirs augmente l'encombrement et le poids du système optique, ce qui est pénalisant dans le cas où il est situé à l'extrémité d'un robot laser.

D'autre part, le fait d'associer plusieurs miroirs provoque une atténuation supplémentaire du faisceau occasionnée par l'absorption des miroirs (de l'ordre de 2% par miroir). Les puissances de laser utilisées lors des traitements de surface sont importantes (supérieures ou égales à 5kw), ce qui nécessite des systèmes de refroidissement pour tous les composants mis en oeuvre dans le système optique.

Le but essentiel de l'invention est de simplifier les réglages des déformations d'un miroir unique et qu'on soumet à des courbures différentes suivant deux orientations perpendiculaires pour régler en particulier la largeur d'une tache focalisée et la répartition de l'énergie sur la longueur de la tache.

La combinaison nouvelle et caractéristique de l'invention est une rangée de lamelles rectangulaires à faces réfléchissant la lumière et juxtaposées par leurs grands côtés ou côtés de longueur, c'est-à-dire sans bâillement notable par lequel de la lumière incidente serait perdue. De plus, les lamelles sont fixées à des tourillons tournant dans un boîtier et orientés selon la longueur des lamelles, et des mécanismes d'orientation pour tourner les tourillons existent. Des moyens pour courber les lamelles autour d'axes orientés selon leur largeur sont adjoints si on souhaite modifier à volonté la courbure des lamelles, qu'on choisit alors élastiques. Sinon, on peut se contenter de lamelles rigides à face réfléchissante cylindrique.

Cette disposition permet un découplage complet entre la courbure des lamelles et l'orientation des lamelles suivant une rotation perpendiculaire au plan de courbure. Comme en pratique la courbure d'une lamelle est difficile à régler avec précision pour peu qu'on veuille obtenir des surfaces déformées de forme complexe, on associe de préférence la courbure, réglable ou non, des lamelles à la focalisation en largeur, et l'orientation des lamelles permet alors de répartir l'énergie le long de la tache focalisée. Comme une orientation peut être réglée avec une grande précision et que les lamelles peuvent être sans inconvénient nombreuses, des répartitions très différentes et complexes peuvent être obtenues si on le souhaite, ou bien une grande précision si on s'intéresse à une répartition uniforme.

Dans une réalisation de l'invention, chaque tourillon se prolonge par une barrette derrière la face réfléchissante d'une des lamelles et les moyens pour courber les lamelles consistent en des systèmes à vis engagés sur les lamelles et les barrettes pour modifier leurs écartements.

Il est alors possible de commander séparément la courbure de chaque lamelle. Une disposition particulièrement simple consiste à utiliser un seul système à vis sur le centre de ladite lamelle, qui est appuyée sur la barrette par ses extrémités longitudinales.

Dans une autre réalisation, les lamelles sont toutes commandées simultanément et à une courbure uniforme. Chaque tourillon est alors composé de deux parties séparées et fixées respectivement à une extrémité longitudinale d'une des lamelles, le boîtier comprenant deux parties tournant l'une sur l'autre autour d'un axe orienté selon la largeur des lamelles sous l'action d'un mécanisme de courbure, une des parties de chaque tourillon tournant dans une des parties du boîtier, l'autre partie de chaque tourillon tournant dans l'autre des parties du boîtier.

Il est d'autre part avantageux que chaque mécanisme d'orientation soit agencé de façon à imposer des rotations opposées à une paire respective de lamelles disposées symétriquement par rapport à une ligne médiane, orientée longitudinalement, du miroir, car comme le faisceau a une répartition d'énergie symétrique et qu'on cherche normalement à obtenir une répartition symétrique de l'énergie lumineuse sur la tache focalisée, le miroir doit être déformé symétriquement autour de la ligne médiane.

Si de plus les lamelles sont juxtaposées avec des décalages en profondeur de sorte qu'elles se recouvrent sur une partie de leur largeur, les diffractions sur les bords des lamelles sont réduites.

L'invention est encore relative à une installation à laser et miroir déformable, le faisceau laser et le miroir étant agencés de façon à focaliser le faisceau sur une portion rectangulaire d'une surface à traiter, la largeur de ladite portion dépendant de la courbure des lamelles et la longueur de ladite portion, ainsi que la répartition de l'énergie du faisceau le long de ladite portion, dépendant de l'orientation des lamelles.

L'invention va maintenant être décrite plus en détail à l'aide des figures suivantes annexées à titre illustratif et non limitatif :
- la figure 1 est une vue en coupe de côté d'une réalisation de l'invention,
- la figure 2 est une vue de dessous de la même réalisation,
- la figure 3 est une vue de face de la même réalisation,
- la figure 4 est une vue en perspective d'une autre réalisation de l'invention,
- la figure 5 est une vue en coupe de côté d'une réalisation de l'invention à lamelles d'aspect différent,
- la figure 6 est une vue de face de la même réalisation,
- la figure 7 est un schéma d'utilisation de l'invention.

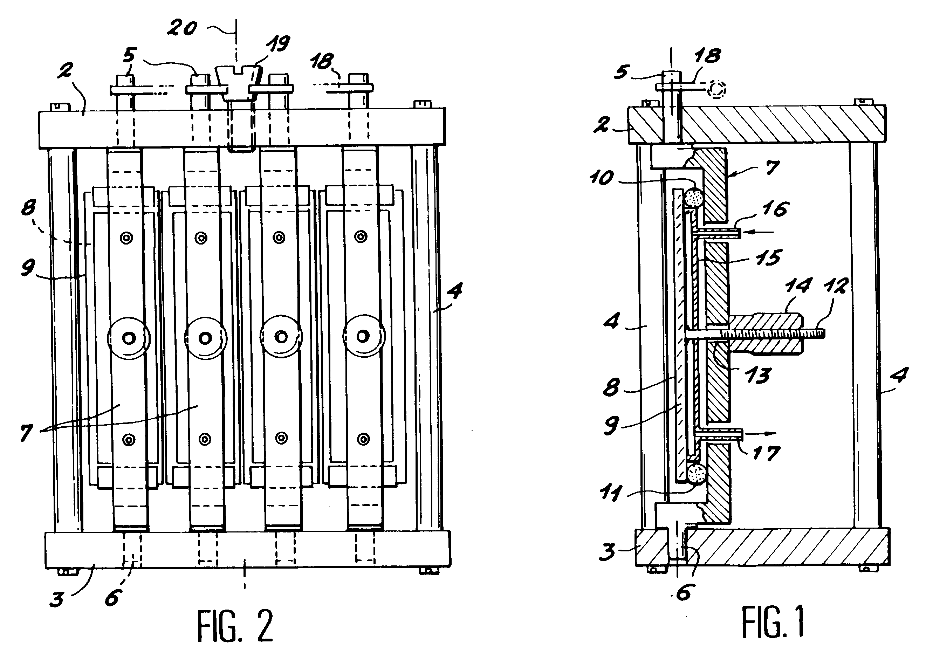

La réalisation des figures 1 à 3 comporte un boîtier 1 unique composé de deux flasques 2 et 3 parallèles et opposés reliés par des entretoises 4. Chaque flasque 2 et 3 porte une rangée de tourillons, respectivement 5 et 6 et chaque tourillon 5 est associé à un tourillon 6 situé en prolongement sur un même axe par une barrette 7 qui les relie. La barrette 7 est recourbée de sorte que la face réfléchissante 8 d'une lamelle 9 rectangulaire et plane ait son centre disposé sur l'axe de rotation des tourillons 5 et 6. On voit bien sur la figure 2 que les lamelles 9 sont des rectangles assez allongés et presque jointifs par leurs grands côtés pour former une surface de miroir presque continue.

Les extrémités longitudinales des lamelles 9 sont posées en appui simple sur des rouleaux 10 et 11 proches respectivement des tourillons 5 et 6 et collés sur la barrette 7, et une tige filetée 12 est fixée au centre de chaque lamelle 9, sur sa face arrière opposée à la face réfléchissante 8. La tige filetée 12 a une longueur suffisante pour traverser un perçage 13 de la barrette 7 et dépasser de l'autre côté. On en profite pour engager un écrou 14 autour de la tige filetée 12 : l'écrou 14 touche la barrette 7, et si on poursuit le vissage on impose une courbure de la lamelle 9 qui rend sa face réfléchissante 8 concave. La barrette 7 a en effet une rigidité très grande par rapport à la lamelle 9. Enfin, une chemise 15 souple, en caoutchouc par exemple, est collée sur la face arrière de la lamelle 9 et parcourue par de l'eau de refroidissement grâce à un conduit d'alimentation 16 et à un conduit d'évacuation 17 placé sur des extrémités opposées de la chemise 15, non loin des rouleaux 10 et 12.

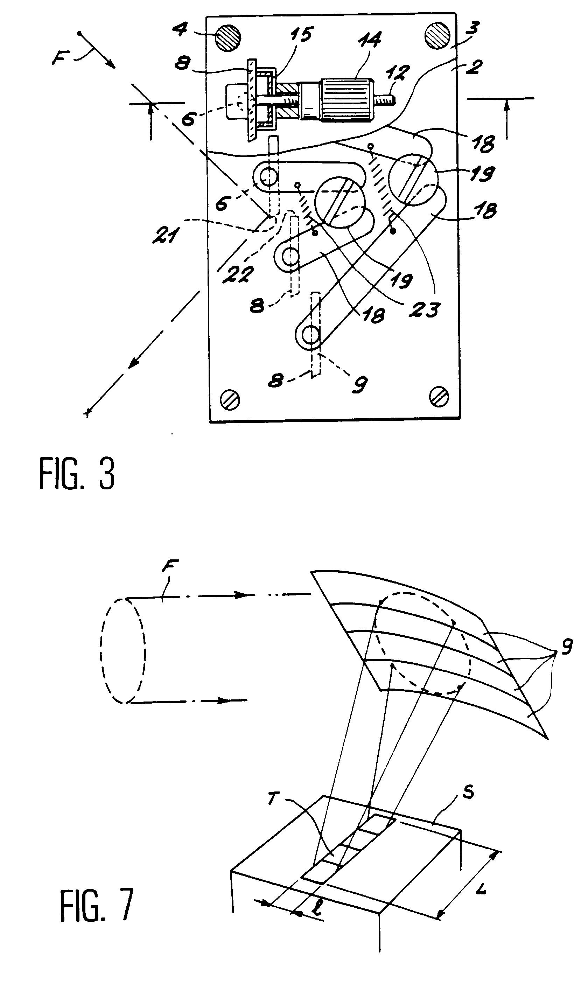

Chaque tourillon 5 est muni d'un levier 18 à l'extérieur du flasque 2 et qui se déplace à une distance constante de celui-ci quand le tourillon 5 tourne. C'est le levier 18 qui commande la rotation du tourillon 5 auquel il est rigidement relié au moyen de vis à tête conique 19 engagées dans des taraudages d'orientation longitudinale du flasque 2. On voit bien sur la figure 2 que la rotation des vis à tête conique 19 déplace des leviers 18, qui touchent la face conique des têtes, et sur la figure 3 que chaque vis à tête conique 19 est associée à deux leviers 18 identiques et qui commandent des tourillons 5 et des lamelles 9 situés symétriquement par rapport à une ligne médiane longitudinale 20 du miroir. Il en résulte que les lamelles 9 associées à chaque vis à tête conique 19 subissent des rotations opposées qui maintiennent le miroir symétrique par rapport à la ligne médiane longitudinale 20. Les deux leviers 18 associés à une même vis à tête conique 19 sont rapprochés et maintenus contre elle par des ressorts 23 qui les unissent.

On remarque que les lamelles 9 sont étagées en profondeur et ne sont qu'approximativement jointives, car un des bords 21 de chacune recouvre le bord 22 adjacent de sa voisine située en retrait. Les bords 22 ne sont donc pas atteints par les rayons du faisceau lumineux F émis vers le miroir, ce qui réduit les diffractions inévitables à ces endroits et qui perturbent la qualité de la focalisation.

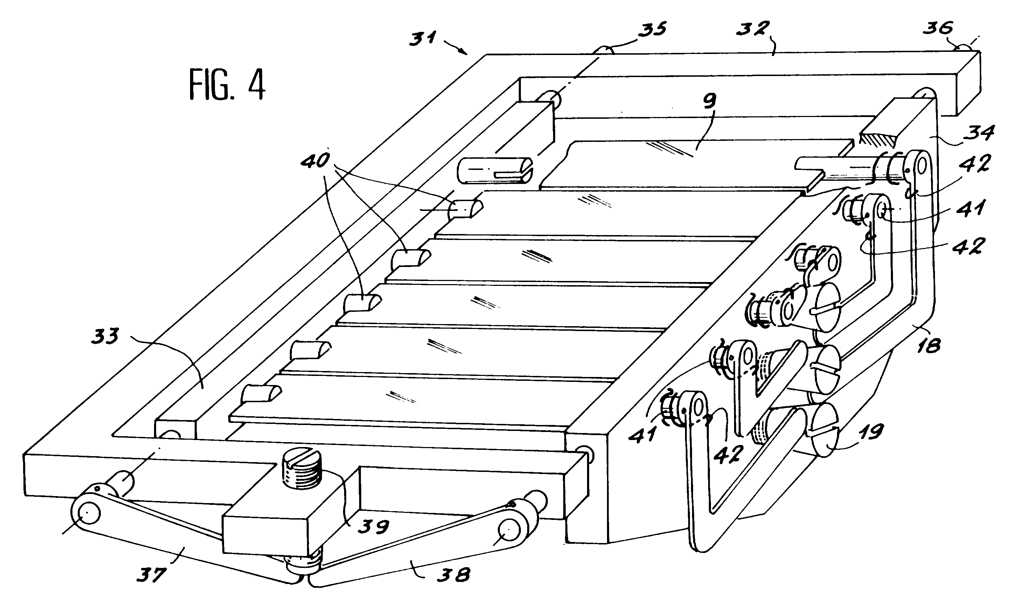

Une autre réalisation apparaît à la figure 4. Le boîtier 31 est ici composé d'un cadre 32 porteur d'une barre simple 33 et d'une barre-support 34. Les barres 33 et 34 tournent l'une par rapport à l'autre autour d'axes respectifs 35 et 36 situés transversalement par rapport aux lamelles, ici encore référencées par 9. Chacun des axes 35 et 36 est terminé par un levier 37 ou 38 dont l'extrémité libre passe à portée de la pointe d'une vis de pression 39 engagée dans un taraudage du cadre 32. On s'aperçoit que les ajustements de position de la vis 39 repoussent plus ou moins les leviers 37 et 38 et font basculer les axes 35 et 36 et les barres 33 et 34.

Chacune des barres 33 et 34 porte une rangée de tourillons fendus, respectivement 40 et 41 ; les extrémités de chaque lamelle 9 sont engagées dans les fentes d'une paire de tourillons fendus 40 et 41 appartenant chacun à une des barres 33 et 34, de sorte que la rotation de ces dernières provoque la flexion ou la courbure uniforme des lamelles 9.

L'orientation des lamelles 9 est provoquée par un dispositif analogue au précédent et composé de leviers 18 et de vis à tête conique 19 qui sont engagées dans la barre-support 34, les leviers 18 faisant tourner les tourillons fendus 41. Les tourillons 5, 6, 40 et 41, qui sont donc libres de tourner dans les flasques 2 et 3 et les barres 33 et 34 sont retenus contre le coulissement par un moyen usuel tel que des anneaux élastiques servant de butée axiale. Un même montage peut être adopté pour les axes 35 et 36. Dans la seconde réalisation, on empêche les lamelles 9 de glisser des fentes des tourillons 40 et 41 en les fixant par des goupilles ou des moyens semblables à ces tourillons 40 et 41. Enfin, des ressorts de torsion 42 engagés autour des tourillons 41 maintiennent les leviers 18 contre les vis à tête conique 19.

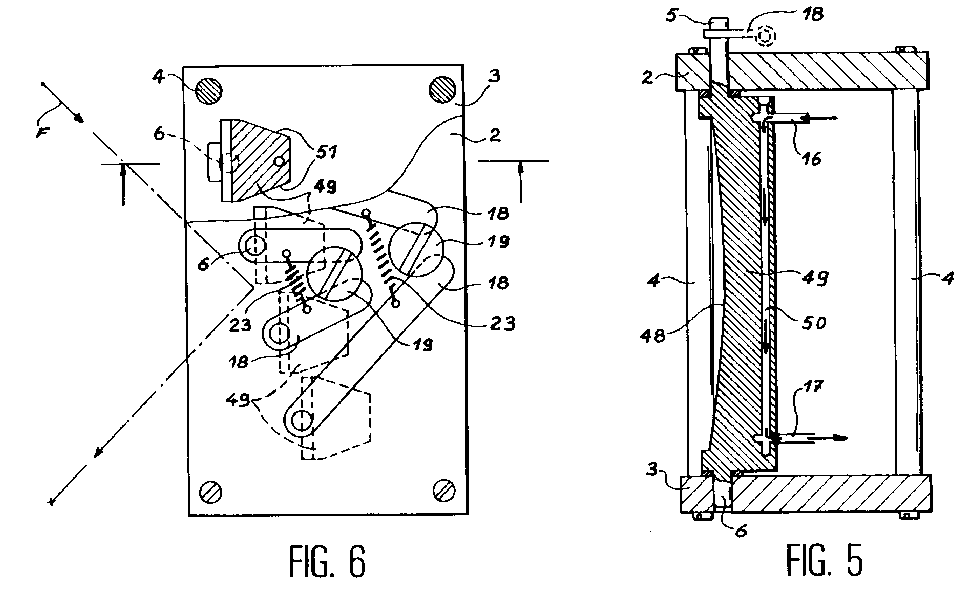

La lamelle 49 de la figure 5 est utilisable à la place d'une des lamelles 9 sur le dispositif des figures 1 à 3, dont on distingue les flasques 2 et 3 et deux des entretoises 4. Elle est massive, rigide et sa face réfléchissante 48 est concave et cylindrique. Le dispositif de refroidissement consiste en une succession de perçages qui constitue un canal 50 ceusé dans la lamelle 49 entre les conduits d'alimentation 16 et d'évacuation 17. On s'aperçoit sur la figure 6 que les lamelles 49 s'amenuisent vers l'arrière par des faces latérales en dépouille 51, grâce auxquelles les lamelles 49 ne se touchent pas et peuvent être tournées sans encombre.

Les autres éléments de la réalisation des figures 1 à 3 sont inchangés.

La figure 7 représente très schématiquement une installation sur laquelle des dispositifs à miroir peuvent être employés : un faisceau lumineux F provenant d'un laser est envoyé vers le miroir dont les lamelles 9 ont été seules figurées et qui le renvoient après l'avoir focalisé vers une surface S d'une pièce devant subir un traitement thermique : le miroir est orienté de façon que la courbure des lamelles 9 régisse la largeur l de la tache T de focalisation, alors que l'orientation des lamelles 9 permet de répartir comme on le souhaite l'énergie du faisceau F le long de la longueur L de la tache T.

Deux façons de travailler courantes consistent soit à imposer une intensité lumineuse uniforme le long de la tache T, soit à imposer une intensité plus forte à ses extrémités, ce qui provoque un effet analogue sur toute la porticn illuminée de la surface S, car les plus fortes pertes de chaleur par conduction aux extrémités de la tache T expliquent que l'échauffement soit moindre à ces endroits si on ne prend pas cette précaution.

## Revendications

1. Miroir déformable composé d'une rangée de lamelles (9, 49) à face (8, 48) réfléchissant la lumière, rectangulaires et juxtaposées par leurs grands côtés, dans lequel les lamelles (9, 49) sont fixées à des tourillons (5, 6, 40, 41) tournant dans un boîtier (2 et 3, 32, 33 et 34) et orientés selon la longueur des lamelles, et des mécanismes d'orientation (18, 19) existent pour tourner les tourillons.

2. Miroir déformable suivant la revendication 1, caractérisé en ce que chaque mécanisme d'orientation (18, 19) est agencé de façon à imposer des rotations opposées à une paire respective de lamelles disposées symétriquement par rapport à une ligne médiane (20), orientée longitudinalement, du miroir.

3. Miroir déformable suivant la revendication 2, caractérisé en ce que chaque mécanisme d'orientation comprend une paire de leviers (18) dont chacun est fixé au tourillon d'une des lamelles de la paire, et une came (19) liée au boîtier.

4. Miroir déformable suivant la revendication 3, caractérisé en ce que la came de chaque mécanisme d'orientation consiste en une vis à tête conique engagée dans le boîtier et dont la tête touche les leviers, des ressorts (23) repoussant les leviers vers la tête.

5. Miroir déformable suivant la revendication 1, caractérisé en ce que les lamelles sont juxtaposées avec des décalages en profondeur et en ce qu'elles se recouvrent sur une partie de leur largeur (21 et 22).

6. Miroir déformable suivant la revendication 1, caractérisé en ce que les lamelles (49) ont une face réfléchissante cylindrique (48).

7. Miroir déformable suivant la revendication 1, caractérisé en ce que les lamelles (9) sont élastiques et en ce qu'existent des moyens pour courber (12 à 14, 37 à 39) les lamelles autour d'axes orientés selon leur largeur.

8. Miroir déformable suivant la revendication 7, caractérisé en ce que chaque tourillon se prolonge par une barrette (7) derrière la face réfléchissante (8) d'une des lamelles, les moyens pour courber les lamelles consistant en des systèmes à vis engagés sur les lamelles et les barrettes pour modifier leurs écartements.

9. Miroir déformable suivant la revendication 3, caractérisé en ce que chaque barrette ne comprend qu'un système à vis, engagé sur le centre de ladite lamelle, qui est appuyée sur la barrette par ses extrémités longitudinales.

10. Miroir déformable suivant la revendication 7, caractérisé en ce que chaque tourillon est composé de deux parties séparées (40, 41) et fixées respectivement à une extrémité longitudinale d'une des lamelles (9), le boîtier comprenant deux parties (33, 34) tournant l'une sur l'autre autour d'un axe (35, 36) orienté selon la largeur des lamelles sous l'action d'un mécanisme de courbure (37 à 39), une des parties de chaque tourillon tournant dans une des parties du boîtier, l'autre partie de chaque tourillon tournant dans l'autre des parties du boîtier.

11. Miroir déformable suivant la revendication 1, caractérisé en ce que les lamelles (9) sont doublées d'une chemise souple (15) délimitant avec ces lamelles un circuit de refroidissement parcouru par un fluide.

12. Installation à laser comprenant un faisceau laser et un miroir déformable suivant la revendication 1, le faisceau et le miroir étant agencés de façon à focaliser le faisceau (F) sur une portion rectangulaire (T) d'une surface (S) à traiter, la largeur (l) de ladite portion dépendant de la courbure des lamelles (9) et la longueur (L) de ladite portion, ainsi que la répartition de l'énergie du faisceau le long de ladite portion, dépendant de l'orientation des lamelles.

## Patentansprüche

1. Verformbarer Spiegel, gebildet durch eine Reihe von Lamellen (9, 49) mit das Licht reflektierender Fläche (8, 48), rechtwinklig und mit ihren Längsseiten nebeneinanderliegend, bei dem die Lamellen (9, 49) an Lagerzapfen (5, 6, 40, 41) befestigt sind, drehbar in einem Gehäuse (2 und 3, 32, 33 und 34) und entsprechend der Länge der Lamellen orientiert bzw. ausgerichtet, und Orientierungs- bzw. Ausrichtmechanismen (18, 19) zum Drehen der Lagerzapfen vorhanden sind.

2. Verformbarer Spiegel nach Anspruch 1,
dadurch gekennzeichnet, daß jeder Ausrichtmechanismus (18, 19) so beschaffen ist, daß er jeweils ein Paar Lamellen in entgesetzten Richtungen in Drehung versetzt, die symetrisch angeordnet sind bezüglich einer Mittellinie (20) in der Längsrichtung des Spiegels.

3. Verformbarer Spiegel nach Anspruch 2,
dadurch gekennzeichnet, daß jeder Ausrichtmechanismus ein Paar Hebel (18) umfaßt, von denen jeder am Lagerzapfen von einer der Lamellen des Paares befestigt ist, und eine mit dem Gehäuse verbundene Nocke (19).

4. Verformbarer Spiegel nach Anspruch 3,
dadurch gekennzeichnet, daß die Nocke von jedem Ausrichtmechanismus aus einer Schraube mit einem konischen Kopf besteht, eingefügt in das Gehäuse, deren Kopf die Hebel berührt, wobei Federn (23) die Hebel gegen den Kopf drücken.

5. Verformbarer Spiegel nach Anspruch 1,
dadurch gekennzeichnet, daß die Lamellen mit Tiefenversetzungen nebeneinanderliegen und dadurch, daß sie sich überdecken auf einem Teil ihrer Breite (21 und 22).

6. Verformbarer Spiegel nach Anspruch 1,
dadurch gekennzeichnet, daß die Lamellen (49) eine zylindrische reflektierende Fläche (48) haben.

7. Verformbarer Spiegel nach Anspruch 1,
dadurch gekennzeichnet, daß die Lamellen (9) elastisch sind und dadurch, daß Einrichtungen (12 bis 14, 37 bis 39) vorhanden sind, um die Lamellen um Achsen zu krümmen, die entsprechend ihrer Breite ausgerichtet sind.

8. Verformbarer Spiegel nach Anspruch 7,
dadurch gekennzeichnet, daß jeder Lagerzapfen sich durch einen Stab (7) hinter der reflektierenden Fläche (8) von einer der Lamellen verlängert, wobei die Einrichtungen zum Krümmen der Lamellen gebildet werden durch Schraubsysteme, angebracht an den Lamellen und den Stäben, um ihre Abstände zu verändern.

9. Verformbarer Spiegel nach Anspruch 3,
dadurch gekennzeichnet, daß jeder Stab nur ein Schraubsystem umfaßt, angebracht in der Mitte der Lamelle, die sich mit ihren Längsenden auf dem Stab abstützt.

10. Verformbarer Spiegel nach Anspruch 7,
dadurch gekennzeichnet, daß jeder Lagerzapfen gebildet wird durch zwei getrennte Teile (40, 41), jeweils befestigt an einem Längsende von einer der Lamellen (9), wobei das Gehäuse zwei Teile (33, 34) umfaßt, drehbar unter der Wirkung eines Krümmungsmechnismus (37, 39) um eine in Richtung Lamellenbreite ausgerichtete Achse (35, 36), und einer der Teile jedes Lagerzapfens in einem der Teile des Gehäuses dreht und der andere Teil jedes Lagerzapfens in dem anderen Teil des Gehäuses dreht.

11. Verformbarer Spiegel nach Anspruch 1,
dadurch gekennzeichnet, daß die Lamellen (9) dubliert werden durch eine biegsame Haut (15), die mit diesen Lamellen einen durch ein Fluid durchströmten Kühlkreis begrenzt.

12. Laservorrichtung, umfassend einen Laserstrahl und einen verformbaren Spiegel nach Anspruch 1, wobei der Strahl und der Spiegel eingestellt werden, um den Strahl (F) auf ein rechteckiges Teilstück (T) einer zu behandelnden Fläche (S) zu fokussieren, und die Breite (l) des besagten Teilstücks abhängt von der Krümmung der Lamellen (9), und die Länge (L) des besagten Teilstücks ebenso wie die Verteilung der Energie des Strahl längs des besagten Teilstücks abhängt von der Orientierung bzw. Ausrichtung der Lamellen.

## Claims

1. Deformable mirror constituted by a row of lamellas (, 49) having a face (8, 48) reflecting the light, which are rectangular and juxtaposed by their large sides, wherein the lamellas (9, 49) are fixed to journals (5,6, 40, 41) rotating in a case (2, 3, 32, 33, 34) oriented in the length direction of the lamellas and there are orientation mechanisms (18, 19) for rotating the journals.

2. Deformable mirror according to claim 1, characterized in that each orientation mechanism (18, 19) is arranged so as to impose opposite rotations to a respective pair of lamellas arranged symmetrically with respect to a longitudinally oriented median line (20) of the mirror.

3. Deformable mirror according to claim 2, characterized in that each orientation mechanism comprises a pair of levers (18), each of which is fixed to the journal of one of the lamellas of the pair and a cam (19) connected to the case.

4. Deformable mirror according to claim 3, characterized in that the cam of each orientation mechanism is constituted by a conical head screw engaged in the case and whose head touches the levers, springs (23) moving the levers towards the head.

5. Deformable mirror according to claim 1, characterized in that the lamellas are juxtaposed with depth displacements and in that they overlap over part of their width (21, 22).

6. Deformable mirror according to claim 1, characterized in that the lamellas (49) have a cylindrical reflecting face (48).

7. Deformable mirror according to claim 1, characterized in that the lamellas (9) are elastic and that means are provided for curving (12 to 14, 37 to 39) the lamellas about axes oriented in their width direction.

8. Deformable mirror according to claim 7, characterized in that each journal is extended by a small bar (7) behind the reflecting face (8) of one of the lamellas, the means for curving the lamellas consisting of screw systems engaged on the lamellas and small bars for modifying their spacings.

9. Deformable mirror according to claim 3, characterized in that each small bar only comprises one screw system engaged on the centre of said lamella and which bears on the small bar by its longitudinal ends.

10. Deformable mirror according to claim 7, characterized in that each journal is constituted by two separate portions (40, 41) respectively fixed to a longitudinal end of one of the lamellas (9), the case having two portions (33, 34) rotating on one another about a spindle (35, 36) oriented in the width direction of the lamellas under the action of a curvature mechanism (37 to 39), one of the portions of each journal rotating in one of the portions of the case, the other portion of each journal rotating in the other of the portions of the case.

11. Deformable mirror according to claim 1, characterized in that the lamellas (9) are duplicated by a flexible jacket (15) defining with said lamellas a fluid-traversed cooling circuit.

12. Laser installation having a laser beam and a deformable mirror according to claim 1, the beam and the mirror being arranged so as to focus the beam (F) onto a rectangular portion (T) of a surface (S) to be treated, the width (l) of said portion being dependent on the curvature of the lamellas (9) and the length (L) of said portion, as well as the energy distribution of the beam along said portion being dependent on the orientation of the lamellas.
